# EUROPÄISCHE PATENTANMELDUNG

(11) **EP 4 197 881 A1**
(43) Veröffentlichungstag der Anmeldung: **21.06.2023**
(21) Anmeldenummer: 22212453.9
(22) Anmeldetag: 09.12.2022
(51) Int. Cl.: B61L 23/04, B60W 50/14, G08G 1/16

(54) **VERFAHREN ZUM BETREIBEN EINES KOLLISIONSWARNSYSTEMS EINES FAHRZEUGS**

(30) Priorität: 14.12.2021 DE 102021214286
(71) Anmelder: Robert Bosch GmbH, 70442 Stuttgart (DE)
(72) Erfinder: Anz, Ruprecht, 74251 Lehrensteinsfeld (DE); Hoepfner, Rene, 71640 Ludwigsburg (DE); Filiberto, Sylvain, 93130 Noisy-le-Sec (FR)

(57) **Zusammenfassung**

Die Erfindung betrifft ein Verfahren zum Betreiben eines Kollisionswarnsystems eines Fahrzeugs, insbesondere einer Straßenbahn, wobei das Kollisionswarnsystem einen Fernwirkungssensor umfasst und eingerichtet ist, ausgehend von Signalen des Fernwirkungssensors ein Objekt in einem Fahrweg des Fahrzeugs als Kollisionsobjekt zu erkennen und eine Position des Kollisionsobjekts zu ermitteln, wobei ein Betriebsparameter des Kollisionswarnsystems in Abhängigkeit einer Blickrichtungserkennung eines Fahrers des Fahrzeugs verändert wird. Die Erfindung betrifft außerdem eine Vorrichtung, ein maschinenlesbares Speichermedium und ein Fahrzeug.

## Beschreibung

### Stand der Technik

Kollisionswarnsysteme für Fahrzeuge, insbesondere für Straßenbahnen oder andere Schienenfahrzeuge sind bekannt. Hierbei kann es sich z.B. um eine Vorrichtung, die einen Radarsensor, einen Ultraschallsensor oder eine Kamera umfasst und ausgehend von den Signalen der jeweiligen Sensoren die Anwesenheit von potentiellen Kollisionsobjekten im Fahrweg des Fahrzeugs erkennt, handeln. Solche Kollisionswarner sind insbesondere für Straßenbahnen vorteilhaft, da zum einen der Fahrweg der Straßenbahn über das befahrene Gleis sehr präzise bestimmbar ist und sich zum anderen wegen des bekannten Lichtraumprofils bei bekanntem Fahrweg ein exakter Bereich definieren lässt, in dem ein anwesendes Objekt zu einer Kollision führen könnte. Darüber hinaus werden Straßenbahnen oft in komplexen und unübersichtlichen Verkehrssituationen eingesetzt, was einen Kollisionswarner besonders vorteilhaft macht. Kollisionswarner geben bei Erkennung eines Kollisionsobjekts eine Warnung an den Fahrer des Fahrzeugs, insbesondere der Straßenbahn, aus. Wird ein Mindestabstand, der ggf. geschwindigkeitsabhängig sein kann, unterschritten, kann auch eine automatische Bremsung erfolgen.

Kollisionswarner für Straßenbahnen sind als Nachrüstlösungen bekannt. In sehr komplexen Verkehrssituationen, z.B. dem vorsichtigen Anfahren einer Straßenbahn während sich Fußgänger vor der Bahn befinden, werden Kollisionswarner von den Fahrern oft ausgeschaltet, da in einer solchen Situation die Fußgänger eine Warnung auslösen würden, obwohl der Fahrer die Fußgänger offensichtlich wahrgenommen hat und trotz deren Anwesenheit beschlossen hat, ggf. begleitet von einer Betätigung der Klingel, die Straßenbahn in Bewegung zu versetzen.

Kollisionswarner haben oftmals mehrere Betriebsparameter, wie z.B. die Entfernung zu einem Kollisionsobjekt, ab der eine Warnung ausgegeben werden soll.

Sensoren zur Erkennung der Blickrichtung vom Menschen sind bekannt. Hierfür eignen sich insbesondere Kameras, die das Gesicht erfassen und die Position der Augen und insbesondere der Pupillen erkennen und daraus eine Blickrichtung ableiten können. Blickrichtungserkennungssysteme müssen dabei derart angeordnet sein, dass das Gesicht des zu beobachtenden Menschen im Wesentlichen zugewandt ist. Hierbei müssen insbesondere beiden Augen, auch bei einer leichten Drehung oder Neigung des Kopfes, erkennbar sein.

### Offenbarung der Erfindung

Das erfindungsgemäße Verfahren zum Betreiben eines Kollisionswarnsystems eines Fahrzeugs, insbesondere einer Straßenbahn, wobei das Kollisionswarnsystem einen Fernwirkungssensor umfasst und eingerichtet ist, ausgehend von Signalen des Fernwirkungssensors ein Objekt in einem Fahrweg des Fahrzeugs als Kollisionsobjekt zu erkennen und eine Position des Kollisionsobjekts zu ermitteln, hat den Vorteil, dass ein Betriebsparameter des Kollisionswarnsystems in Abhängigkeit einer Blickrichtungserkennung eines Fahrers des Fahrzeugs verändert wird.

Vorteilhaft ist, wenn die Blickrichtungserkennung anhand einer Blickrichtungsermittlungsvorrichtung vorgenommen wird, die eine Kamera umfasst, wobei mittels der Kamera eine Porträt-Bild von dem Fahrer des Fahrzeugs erfasst wird. Unter einem Porträt-Bild soll dabei insbesondere eine Aufnahme des Gesichts des Fahrers verstanden werden, auf der beide Augen des Fahrers zu erkennen sind. Die Erkennung der Blickrichtung des Fahrers kann ausgehend von einzelnen Bildern oder von Bildfolgen, also Videosequenzen, erfolgen.

Vorteilhaft ist, wenn die Blickrichtungserkennung eine Ermittlung einer Blickrichtung des Fahrers relativ zur Orientierung des Fahrzeugs umfasst. Hierfür ist eine Kalibration der Blickrichtungsermittlungsvorrichtung vorteilhaft, die eine Abspeicherung einer Information zur Orientierung der Blickrichtungsermittlungsvorrichtung relativ zu dem Fahrzeug umfasst. Somit kann vorteilhaft bei bekannter Orientierung des Fahrzeugs und erfasster Blickrichtung relativ zum Fahrzeug eine absolute Blickrichtung ermittelt werden.

Vorteilhaft ist, wenn die Blickrichtung des Fahrers ermittelt wird und eine Warnung vor einem erkannten Kollisionsobjekt ab einer ersten Entfernungsschwelle ausgegeben wird, falls die Blickrichtung des Fahrers nicht der Position des Kollisionsobjekts entspricht und die Warnung vor dem Kollisionsobjekt ab einer zweiten Entfernungsschwelle ausgegeben wird, falls die Blickrichtung des Fahrers der Position des Kollisionsobjekts entspricht, wobei die erste Entfernungsschwelle einer größeren Entfernung zwischen dem Fahrzeug und dem Kollisionsobjekt entspricht als die zweite Entfernungsschwelle. Somit kann die Zahl der ausgegebenen Warnungen vorteilhaft reduziert werden, da vor weiter entfernten Kollisionsobjekten nur dann gewarnt wird, wenn sich diese nicht in der Blickrichtung des Fahrers befinden, was mit hoher Wahrscheinlichkeit bedeuten würde, dass der Fahrer das Kollisionsobjekt bereits bemerkt hat. Umgekehrt kann davon ausgegangen werden, dass der Fahrer ein Kollisionsobjekt, dass sich nicht in seiner Blickrichtung befindet, nicht wahrgenommen hat, sodass in diesem Fall eine Warnung auch bei relativ großer Entfernung eine sinnvolle Information für den Fahrer darstellt. Die erste und die zweite Entfernungsschwelle können dabei geschwindigkeitsabhängig gewählt werden. Alternativ oder zusätzlich können die erste und die zweite Geschwindigkeitsschwelle auch von einer zuvor ermittelten Reaktionsfähigkeit des Fahrers abhängen.

Vorteilhaft ist, wenn die Blickrichtung des Fahrers ermittelt wird, und vor einem Kollisionsobjekt gewarnt wird, dessen Position der Blickrichtung des Fahrers nicht entspricht, wobei Warnungen vor Kollisionsobjekten, deren Position der Blickrichtung entsprechen, unterdrückt werden. Diese Weiterbildung ist besonders bei einem Anfahrvorgang einer Straßenbahn, insbesondere in einer Situation, in der sich Fußgänger vor der Straßenbahn befinden, vorteilhaft. Somit kann das Kollisionswarnsystem auch in dieser Situation verwendet werden ohne zu viele irrelevante Warnungen auszugeben, da davon ausgegangen werden kann, dass Kollisionsobjekte bzw. Fußgänger, die sich in Blickrichtung des Fahrers befinden, dem Fahrer bereits bekannt sind.

Vorteilhaft ist, wenn ausgehend von der Blickrichtung des Fahrers ein Sichtfeld ermittelt wird und vor einem Kollisionsobjekt gewarnt wird, dessen Position außerhalb des Sichtfelds des Fahrers liegt, wobei Warnungen vor Kollisionsobjekten, deren Position innerhalb des Sichtfeldes liegen, unterdrückt werden. Vorteilhafter Weise entspricht das Sichtfeld dabei einem Sichtkegel, der einen Sichtwinkel des Fahrers um dessen Blickrichtung herum charakterisiert. Somit kann noch vorteilhafter zwischen Kollisionsobjekten bzw. Fußgängern, die dem Fahrer bekannt sind und solchen, die dem Fahrer nicht bekannt sind, unterschieden werden.

Vorteilhaft ist, wenn die Unterdrückung von Warnungen nur erfolgt, wenn die Geschwindigkeit des Fahrzeugs unterhalb einer Geschwindigkeitsschwelle liegt. Somit kann insbesondere der Anfahrvorgang von Straßenbahnen unterstützt werden.

Vorteilhaft ist, wenn eine Warnungsquitierung nur möglich ist, wenn die Blickrichtung des Fahrers der Position des Kollisionsobjekts entspricht. Somit kann vorteilhaft erkannt werden, ob ein Fahrer durch Hinwendung seines Blickes auf die Position eines gemeldeten Kollisionsobjekts dessen Vorhandensein oder nicht Vorhandensein überprüft. Stellt sich dabei heraus, dass das gemeldete Kollisionsobjekt nicht vorhanden ist, es sich also um eine Fehlwarnung handelt, kann der Fahrer die Warnung durch die Warnungsquitierung, beispielsweise die Betätigung eines Schalters, ausschalten.

Vorteilhaft sind außerdem eine Vorrichtung, die eingerichtet ist, jeden Schritt des erfindungsgemäßen Verfahrens durchzuführen sowie ein maschinenlesbares Speichermedium, auf dem ein Computerprogramm gespeichert ist, wobei das Computerprogramm eingerichtet ist, jeden Schritt des erfindungsgemäßen Verfahrens durchzuführen, wenn das Computerprogramm auf einer Recheneinheit abläuft.

Vorteilhaft ist außerdem ein Fahrzeug, insbesondere eine Straßenbahn, die die Vorrichtung und/oder das Speichermedium umfasst.

In besonders vorteilhafter Weiterbildung kann ausgehend von einer Abweichung zwischen der Blickrichtung des Fahrers zum Zeitpunkt der Ausgabe einer Warnung vor einem Kollisionsobjekt und der Position des Kollisionsobjekts, die Aufmerksamkeit und/oder Müdigkeit des Fahrers ermittelt werden. Ist die Abweichung eher gering, lässt dies auf eine hohe Aufmerksamkeit schließen, da der Fahrer diejenigen Bereiche vor dem Fahrzeug im Auge behält, in der mit erhöhter Wahrscheinlichkeit Kollisionsobjekte zu erwarten sind.

In besonders vorteilhafter Weiterbildung kann ausgehend von einer Zeitspanne zwischen der Ausgabe der Warnung vor dem Kollisionsobjekt und einem Richten des Blickes des Fahrers auf die Position des Kollisionsobjekts auf die Aufmerksamkeit und/oder Müdigkeit und/oder Reaktionsfähigkeit des Fahrers geschlossen werden. Ein langsames Richten des Blickes auf ein erkanntes Kollisionsobjekt ist ein Indikator für eine gesteigerte Müdigkeit des Fahrers.

In besonders vorteilhafter Ausgestaltung wird der Betriebsparameter des Kollisionswarnsystems in Abhängigkeit der so ermittelten Aufmerksamkeit und/oder Müdigkeit und/oder Reaktionsfähigkeit des Fahrers verändert. Insbesondere kann bei großer Müdigkeit bzw. geringer Reaktionsfähigkeit die Geschwindigkeitsschwelle, unterhalb der Warnungen unterdrückt werden, herabgesetzt werden. Insbesondere können die erste und die zweite Entfernungsschwelle bei erhöhter Müdigkeit bzw. verringerter Aufmerksamkeit des Fahrers vergrößert werden, sodass die erste und die zweite Entfernungsschwelle weiter von dem Fahrzeug entfernt liegen.

In besonders vorteilhafter Weiterbildung kann eine Objekterkennung des Kollisionswarnsystems an die Aufmerksamkeit und/oder Müdigkeit und/oder Reaktionsfähigkeit des Fahrers angepasst. Bei reduzierter Aufmerksamkeit bzw. hoher Müdigkeit kann eine Auslöseschwelle des Kollisionswarnsystems derart verändert werden, dass mit einer höheren Wahrscheinlichkeit Kollisionsobjekte schon in großer Entfernung erkannt werden, wobei gleichzeitig mit höherer Wahrscheinlichkeit Fehlwarnungen ausgegeben werden.

Nachfolgend werden Ausführungsbeispiele der Erfindung vorgestellt. Dabei zeigt:

### Kurze Beschreibung der Zeichnung

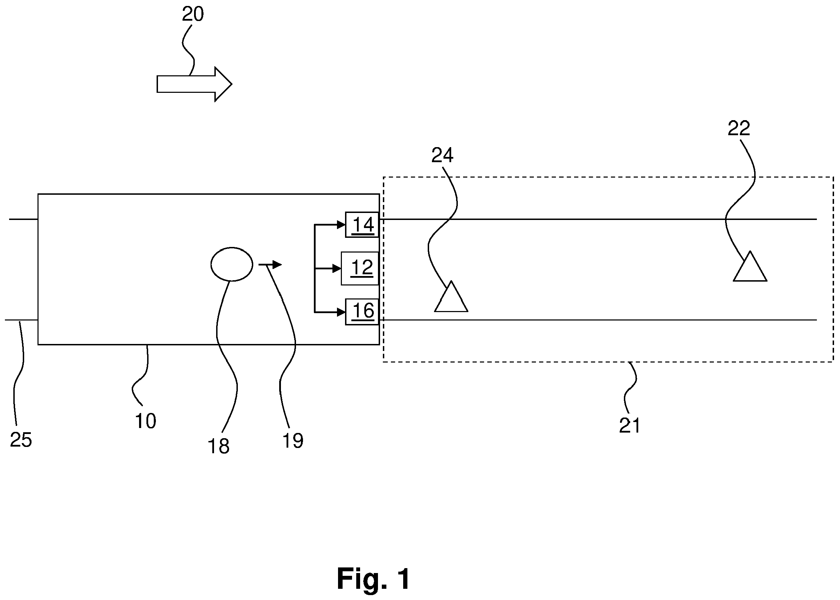

- Fig. 1: Eine schematische Darstellung eines Schienenfahrzeugs, das zur Durchführung eines Ausführungsbeispiels des erfindungsgemäßen Verfahrens eingerichtet ist.

Figur 1 zeigt eine schematische Darstellung eines Schienenfahrzeugs (10), das einen Fahrweg (25) befährt. Bei dem Schienenfahrzeug (10) kann es sich insbesondere um eine Straßenbahn, bei dem Fahrweg (25) insbesondere um ein Gleis handeln.

Das Schienenfahrzeug (10) umfasst einen Fernwirkungssensor (14), eine Steuereinheit (12) und eine Blickrichtungsermittlungsvorrichtung, die insbesondere eine Kamera (16) umfassen kann, die derart auf einen Fahrer (18) des Schienenfahrzeugs (10) gerichtet ist, dass die Kamera die Position der Augen und Pupillen des Fahrers (19) erfassen kann, wenn die Blickrichtung (19) des Fahrers (18) in etwa der Fahrtrichtung (20) des Schienenfahrzeugs (10) entspricht. Der Fernwirkungssensor (14), bei dem es sich beispielsweise um einen Radarsensor handeln kann, bildet zusammen mit der Steuereinheit (12) und insbesondere der darauf installierten Software ein Kollisionswarnsystem. Die Kamera bildet zusammen mit der Steuereinheit (12) und insbesondere der darauf installierten Software eine Blickrichtungsermittlungsvorrichtung.

In Fahrtrichtung (20) vor dem Schienenfahrzeug (10) befindet sich ein Überwachungsbereich (21), der mittels des Fernwirkungssensors (14) auf die Anwesenheit von Kollisionsobjekten (22, 24) überwacht wird. Der Überwachungsbereich ist bezüglich seiner Breite und Höhe insbesondere durch ein Lichtraumprofil des Schienenfahrzeugs (10) definiert. Die Ausdehnung des Überwachungsbereichs (21) in Fahrtrichtung (20) des Schienenfahrzeugs (10) kann geschwindigkeitsabhängig gewählt werden. Die Ausdehnung des Überwachungsbereichs kann in allen drei Raumrichtungen geringer sein, als ein Detektionswinkel und eine Reichweite des Fernwirkungssensors (14) maximal ermöglichen würden.

Ein Ablauf eines ersten Ausführungsbeispiels des erfindungsgemäßen Verfahrens sieht wie folgt aus: Die Blickrichtung (19) des Fahrers (18) des Schienenfahrzeugs (10), insbesondere einer Straßenbahn, wird mittels der Kamera (16) und der Recheneinheit (12) kontinuierlich ermittelt. Mittels des Fernwirkungssensors (14) und der Recheneinheit (12) wird der Überwachungsbereich (21) vor dem Schienenfahrzeug (10) kontinuierlich auf die Anwesenheit von Kollisionsobjekten (22, 24) überwacht. Abhängig von einer Geschwindigkeit, mit der das Schienenfahrzeug (10) den Fahrweg (25) befährt, werden eine erste und eine zweite Entfernungsschwelle definiert, wobei die erste Entfernungsschwelle weiter von dem Schienenfahrzeug (10) entfern ist, als die zweite Entfernungsschwelle. Bei einer Geschwindigkeit des Schienenfahrzeugs (10) vom 10 m/s kann sich die erste Entfernungsschwelle beispielsweise in einer Entfernung von 30 Metern von dem Schienenfahrzeug (10), die zweite Entfernungsschwelle beispielsweise in einer Entfernung von 10 Metern von dem Schienenfahrzeug (10), befinden.

Wird erkannt, dass sich zwischen der ersten und der zweiten Entfernungsschwelle ein Kollisionsobjekt (22) befindet, wird überprüft, ob die Blickrichtung (19) des Fahrers (18) der Position des Kollisionsobjekts (22) entspricht. Mit anderen Worten wird somit überprüft, ob der Fahrer (18) das Kollisionsobjekt (22) wahrgenommen hat. Entspricht die Blickrichtung (19) des Fahrers (18) der Position des Kollisionsobjekts, wird keine Warnung ausgegeben. Entspricht die Blickrichtung (19) des Fahrers (18) nicht der Position des Kollisionsobjekts (22) wird eine Warnung ausgegeben.

Wird erkannt, dass sich zwischen dem Schienenfahrzeug (10) und der zweiten Entfernungsschwelle ein Kollisionsobjekt (24) befindet, wird unabhängig von der Blickrichtung (19) des Fahrers (18) eine Warnung ausgegeben.

Ein Ablauf eines zweiten Ausführungsbeispiels des erfindungsgemäßen Verfahrens sieht wie folgt aus: Die Blickrichtung (19) des Fahrers (18) des Schienenfahrzeugs (10), insbesondere einer Straßenbahn, wird mittels der Kamera (16) und der Recheneinheit (12) kontinuierlich ermittelt. Mittels des Fernwirkungssensors (14) und der Recheneinheit (12) wird der Überwachungsbereich (21) vor dem Schienenfahrzeug (10) kontinuierlich auf die Anwesenheit von Kollisionsobjekten (22, 24) überwacht. Ausgehend von der Blickrichtung (19) des Fahrers (18) wird ein Sichtfeld des Fahrers (18) ermittelt.

Liegt die Geschwindigkeit des Schienenfahrzeugs (10) unterhalb einer Geschwindigkeitsschwelle, werden Warnungen vor Kollisionsobjekten, die sich innerhalb des Sichtfelds des Fahrers (18) befinden, unterdrückt. Warnungen zu Kollisionsobjekten, die sich außerhalb des Sichtfelds des Fahrers (18) befinden, werden nicht unterdrückt. Somit kann ein Anfahrvorgang des Schienenfahrzeugs (10), insbesondere einer Straßenbahn unterstützt werden, beispielsweise, wenn sich Fußgänger vor dem Schienenfahrzeug (10) befinden.

## Patentansprüche

1. Verfahren zum Betreiben eines Kollisionswarnsystems eines Fahrzeugs, insbesondere einer Straßenbahn, wobei das Kollisionswarnsystem einen Fernwirkungssensor umfasst und eingerichtet ist, ausgehend von Signalen des Fernwirkungssensors ein Objekt in einem Fahrweg des Fahrzeugs als Kollisionsobjekt zu erkennen und eine Position des Kollisionsobjekts zu ermitteln, **dadurch gekennzeichnet, dass** ein Betriebsparameter des Kollisionswarnsystems in Abhängigkeit einer Blickrichtungserkennung eines Fahrers des Fahrzeugs verändert wird.

2. Verfahren nach Anspruch 1, **dadurch gekennzeichnet, dass** die Blickrichtungserkennung anhand einer Blickrichtungsermittlungsvorrichtung vorgenommen wird, die eine Kamera umfasst, wobei mittels der Kamera eine Porträt-Bild von dem Fahrer des Fahrzeugs erfasst wird.

3. Verfahren nach Anspruch 1 oder 2, **dadurch gekennzeichnet, dass** die Blickrichtungserkennung eine Ermittlung einer Blickrichtung des Fahrers relativ zur Orientierung des Fahrzeugs umfasst.

4. Verfahren nach Anspruch 3, **dadurch gekennzeichnet, dass** die Blickrichtung des Fahrers ermittelt wird und eine Warnung vor einem erkannten Kollisionsobjekt ab einer ersten Entfernungsschwelle ausgegeben wird, falls die Blickrichtung des Fahrers nicht der Position des Kollisionsobjekts entspricht und die Warnung vor dem Kollisionsobjekt ab einer zweiten Entfernungsschwelle ausgegeben wird, falls die Blickrichtung des Fahrers der Position des Kollisionsobjekts entspricht, wobei die erste Entfernungsschwelle einer größeren Entfernung zwischen dem Fahrzeug und dem Kollisionsobjekt entspricht als die zweite Entfernungsschwelle.

5. Verfahren nach Anspruch 3, **dadurch gekennzeichnet, dass** die Blickrichtung des Fahrers ermittelt wird, und vor einem Kollisionsobjekt gewarnt wird, dessen Position der Blickrichtung des Fahrers nicht entspricht, wobei Warnungen vor Kollisionsobjekten, deren Position der Blickrichtung entsprechen, unterdrückt werden.

6. Verfahren nach Anspruch 3 oder 5, **dadurch gekennzeichnet, dass** ausgehend von der Blickrichtung des Fahrers ein Sichtfeld ermittelt wird und vor einem Kollisionsobjekt gewarnt wird, dessen Position außerhalb des Sichtfelds des Fahrers liegt, wobei Warnungen vor Kollisionsobjekten, deren Position innerhalb des Sichtfeldes liegen, unterdrückt werden.

7. Verfahren nach Anspruch 5 oder 6, **dadurch gekennzeichnet, dass** die Unterdrückung von Warnungen nur erfolgt, wenn die Geschwindigkeit des Fahrzeugs unterhalb einer Geschwindigkeitsschwelle liegt.

8. Verfahren nach einem der Ansprüche 3 bis 7, **dadurch gekennzeichnet, dass** eine Warnungsquitierung nur möglich ist, wenn die Blickrichtung des Fahrers der Position des Kollisionsobjekts entspricht.

9. Vorrichtung, eingerichtet, jeden Schritt des Verfahrens nach einem der Ansprüche 1 bis 8 durchzuführen.

10. Maschinenlesbares Speichermedium, auf dem ein Computerprogramm gespeichert ist, wobei das Computerprogramm eingerichtet ist, jeden Schritt des Verfahrens nach einem der Ansprüche 1 bis 8 durchzuführen, wenn das Computerprogramm auf einer Recheneinheit abläuft.

11. Fahrzeug, insbesondere Straßenbahn, das die Vorrichtung nach Anspruch 9 und/oder das Speichermedium nach Anspruch 10 umfasst.
